# EUROPÄISCHE PATENTANMELDUNG

(11) **EP 4 415 193 A1**
(43) Veröffentlichungstag der Anmeldung: **14.08.2024**
(21) Anmeldenummer: 24154432.9
(22) Anmeldetag: 29.01.2024
(51) Int. Cl.: H02G 1/12

(54) **VERFAHREN UND DRAHTVERARBEITUNGSMASCHINE ZUR HERSTELLUNG VON FORMTEILEN AUS ISOLIERTEM FLACHMATERIAL**

(30) Priorität: 08.02.2023 DE 102023201030
(71) Anmelder: WAFIOS Aktiengesellschaft, 72764 Reutlingen (DE)
(72) Erfinder: Niethammer, Jörg, 72119 Ammerbuch (DE); Möck, Jörg, 72820 Sonnenbühl (DE); Taigel, Dirk, 72766 Reutlingen (DE)
(74) Vertreter: Patentanwälte Ruff, Wilhelm, Beier, Dauster & Partner mbB

(57) **Zusammenfassung**

Bei einem Verfahren zur Herstellung von geraden oder gebogenen Formteilen aus isoliertem Flachmaterial, das ein elektrisch leitendes Trägermaterial aufweist, welches von einer elektrisch isolierenden Isolationsschicht umhüllt ist, wird das isolierte Flachmaterial mittels einer Einzugseinrichtung von einem Materialvorrat abgezogen und in einer Drahtverarbeitungsmaschine zu einem geraden oder gebogenen Formteil aus isoliertem Flachmaterial verarbeitet, welches dann in einer Schnittoperation von dem zugeführten isolierten Flachmaterial abgetrennt wird. Vor dem Abtrennen des Formteils von dem zugeführten Flachmaterial wird ein Abschnitt des Flachmaterials an einer zufuhrseitigen ersten Klemmstelle und einer mit Abstand dazu liegenden zweiten Klemmstelle durch Einklemmen fixiert. In einem Zwischenbereich zwischen den Klemmstellen wird ein Teil der Isolationsschicht in einer Abisolier-Operation über eine Abisolierlänge von dem elektrisch leitenden Trägermaterial entfernt. Der Abstand zwischen den Klemmstellen wird an Parameter der Abisolier-Operation angepasst, wobei eine der Klemmstellen maschinenfest fixiert bleibt und nur die andere Klemmstelle zur Veränderung des Abstands zwischen den Klemmstellen verfahren wird.

## Beschreibung

### ANWENDUNGSGEBIET UND STAND DER TECHNIK

Die Erfindung betrifft ein Verfahren zur Herstellung von geraden oder gebogenen Formteilen aus isoliertem Flachmaterial sowie eine zur Durchführung des Verfahrens geeignete Drahtverarbeitungsmaschine mit einer Abisoliereinrichtung zum Abisolieren von Abschnitten des isolierten Flachmaterials.

Auf dem Markt werden zunehmend Fahrzeuge mit voll- oder teilelektrischem Antrieb angeboten. Die Fahrzeuge besitzen meist leistungsfähige Energiespeichersysteme mit mehreren Batteriemodulen. Die elektrische Energie muss zwischen den einzelnen Batteriemodulen transportiert werden. Dazu werden isolierte und gebogene Kupfer- oder Aluminiumschienen verwendet, die auch als "Stromschienen" bezeichnet werden. Weiterhin werden zunehmend die in Längsrichtung von Fahrzeugen zwischen Front und Heck laufenden Kabelbäume durch Stromschienen ersetzt. Aufgrund der immer größer werdenden Ströme werden Stromschienen mit entsprechend großem stromführenden Querschnitt benötigt. Da die für die Verlegung von Stromschienen zur Verfügung stehenden Bauräume zum Teil relativ eng und geometrisch komplex sind, werden in vielen Fällen Stromschienen benötigt, die an einer oder mehreren Stellen Biegungen aufweisen.

Auch zum Herstellen von Spulenelementen für Elektromotoren werden häufig Flachmaterialien in Form von isolierten und gebogenen Kupfer- oder Aluminiumdrähte mit Rechteckquerschnitt verwendet.

Bei der Herstellung von isoliertem Flachmaterial für eine Stromschiene oder ein Spulenelement wird ein elektrisch leitendes Trägermaterial (z.B. ein Flachdraht aus Aluminium oder Kupfer) zunächst durchgehend mit einer elektrisch isolierenden Isolationsschicht ummantelt bzw. umhüllt. An den Kontaktstellen zum elektrischen Anschluss des Elements sollte die Isolationsschicht jedoch entfernt sein, so dass das Trägermaterial möglichst blank vorliegt. Hierfür wird ein Arbeitsschritt des "Abisolierens" durchgeführt. Das Abisolieren ist ein Vorgang, bei dem ein Teil der Isolierhülle (auch "Isolierung" oder "Isolation" oder "Isolationsschicht" genannt) eines elektrischen Leiters auf einer bestimmten, zum Anschluss erforderlichen Länge ("Abisolierlänge") entfernt wird. Für die spätere Befestigung in der jeweiligen Einbauumgebung werden Stromschienen dann in der Regel entweder festgeschraubt, festgeklemmt oder festgelötet. Spulenelemente werden entsprechend befestigt.

Die WO 2018/134115 A1 beschreibt ein Verfahren und ein System zur Herstellung eines Biegeteils aus isoliertem Flachmaterial. Das Flachmaterial weist ein flaches elektrisch leitendes Trägermaterial auf, welches von einer elektrisch isolierenden Isolationsschicht umhüllt ist. Das isolierte Flachmaterial wird von einem Materialvorrat einer Biegemaschine zugeführt und in der Biegemaschine zu einem zwei- oder dreidimensional gebogenen Biegeteil aus isoliertem Flachmaterial umgeformt, welches dann in einer Schnittoperation von dem zugeführten isolierten Flachmaterial abgetrennt wird. Vor dem Abtrennen des Biegeteils von dem zugeführten Flachmaterial wird mittels einer in die Biegemaschine integrierten Abisoliereinrichtung an dem in der Biegemaschine geführten Flachmaterial in mindestens einem Abschnitt des isolierten Flachmaterials ein Teil der Isolationsschicht in einer Abisolier-Operation von dem elektrisch leitenden Trägermaterial entfernt. Die Abisolier-Operation wird im Durchlaufverfahren an dem durch die Abisoliereinrichtung durchlaufenden Flachmaterial durchgeführt. Bei einem Ausführungsbeispiel wird die Isolationsschicht an mindestens einer Seitenfläche des Flachmaterials mittels eines Messers mit einer geraden Schneidkante entfernt, die in einer Arbeitsstellung des Messers derart in der Nähe einer freizulegenden Seitenfläche des Trägermaterials angeordnet wird, dass ein von dem Messer erfasster Teil der Isolationsschicht bei Fortbewegung des Flachmaterials relativ zu dem Messer von dem Trägermaterial entfernt wird.

Dokument DE 10 2019 213 976 B4 offenbart eine andere Drahtverarbeitungsmaschine, die zum Herstellen von geraden oder gebogenen Formteilen aus isoliertem Flachmaterial eingerichtet ist und eine integrierte Abisoliereinrichtung aufweist. Diese arbeitet mit Paaren von Fräswerkzeugen, die gleichzeitig an gegenüberliegenden Seitenflächen des Flachmaterials angreifen. Das Flachmaterial wird während einer Fräsoperation mithilfe von Klemmelementen einer steuerbaren Klemmeinrichtung in Bezug auf die Durchlaufachse zentriert und festgehalten, so dass die Fräswerkzeuge zum Abisolieren parallel zur Durchlaufrichtung am stehenden Flachmaterial entlangfahren. Der Abstand zwischen den Klemmelementen ist einstellbar.

Es ist auch bekannt, zum Abisolieren von Flachmaterial Laserstrahlung zu verwenden (vgl. z.B. DE 10 2013 006 361 A1 oder WO 2019/101394 A1). Lasersysteme sind relativ teuer.

### AUFGABE UND LÖSUNG

Es ist eine Aufgabe der Erfindung, ein Verfahren und eine Drahtverarbeitungsmaschine der in der Einleitung erwähnten Art bereitzustellen, die u.a. bei der Fertigung teilweise abisolierter Stromschienen, Spulenelemente oder Vorstufen davon mit hoher Produktivität verwendet werden können und bei unterschiedlichen Anforderungen an die Abisolierung, insbesondere bei unterschiedlichen Abisolierlängen, höchste Qualität liefern können. Die Drahtverarbeitungsmaschine soll relativ kostengünstig sein und im Betrieb relativ niedrige Betriebskosten verursachen.

Zur Lösung dieser Aufgabe stellt die Erfindung ein Verfahren mit den Merkmalen von Anspruch 1 bereit. Weiterhin wird eine Drahtverarbeitungsmaschine mit den Merkmalen von Anspruch 7. bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß einer Formulierung der Erfindung wird ein Verfahren zur Herstellung von geraden oder gebogenen Formteilen aus isoliertem Flachmaterial bereitgestellt, das ein elektrisch leitendes Trägermaterial aufweist, welches von einer elektrisch isolierenden Isolationsschicht umhüllt ist. Der Begriff "Flachmaterial" bezeichnet hier im allgemeinen Werkstücke, deren Trägermaterial wenigstens zwei parallel zueinander ausgerichtete Seitenflächen aufweist. Die zwischen den Seitenflächen gemessene Dicke des Flachmaterials kann geringer sein als die Breite der Seitenflächen. Das Trägermaterial kann z.B. einen Rechteckquerschnitt mit relativ scharfen oder leicht oder komplett gerundeten und/oder mit einer Fase versehenen Kanten aufweisen. Es sind jedoch auch im Wesentlichen quadratische Querschnittsformen möglich, ggf. mit leicht oder komplett gerundeten und/oder mit einer Fase versehenen Kanten.

Das isolierte Flachmaterial wird mittels einer Einzugseinrichtung von einem Materialvorrat abgezogen und in einer Drahtverarbeitungsmaschine zu einem geraden oder gebogenen Formteil aus isoliertem Flachmaterial verarbeitet. Das Formteil wird dann in einer Schnittoperation von dem zugeführten isolierten Flachmaterial abgetrennt. Vor dem Abtrennen des Formteils von dem zugeführten Flachmaterial wird ein Abschnitt des Flachmaterials an einer zufuhrseitigen ersten Klemmstelle und einer mit Abstand dazu liegenden zweiten Klemmstelle durch Einklemmen in einer Klemmrichtung fixiert. In einem Zwischenbereich zwischen den Klemmstellen wird dann ein Teil der Isolationsschicht in einer Abisoliert-Operation über eine Abisolierlänge von dem elektrisch leitenden Trägermaterial entfernt. Der parallel zur Durchlaufachse gemessene (axiale) Abstand zwischen den Klemmstellen wird an Parameter der Abisolier-Operation angepasst. Dabei ist eine der Klemmstellen maschinenfest fixiert und nur die andere Klemmstelle wird zur Veränderung des Abstandes zwischen den Klemmstellen verfahren beziehungsweise verlagert.

Eine zur Durchführung des Verfahrens eingerichtete Drahtverarbeitungsmaschine weist zusätzlich zu der Einzugseinrichtung und der Schnitteinrichtung eine integrierte Abisolier-Einrichtung zum Abisolieren von Abschnitten des isolierten Flachmaterials vor dem Abtrennen des Formteils vom zugeführten Flachmaterial auf. Die Abisolier-Einrichtung umfasst eine Klemmeinrichtung mit Klemmelementen zur Fixierung des Flachmaterials in Bezug auf eine Durchlaufachse während einer Abisolier-Operation. Die Klemmeinrichtung weist eine zufuhrseitige erste Klemmeinheit und eine mit Abstand dazu angeordnete zweite Klemmeinheit auf. Eine der Klemmeinheiten ist maschinenfest montiert und nur die andere Klemmeinheit ist zur Veränderung des Abstands zwischen den Klemmeinheiten über eine Verfahrstrecke verfahrbar.

Dadurch, dass eine der Klemmeinheiten maschinenfest montiert ist, ist für diese die axiale Position, also die Position entlang der Durchlaufachse, fest vorgegeben und dadurch sehr einfach bei der Steuerung des Prozesses zu berücksichtigen. Außerdem ergibt sich dadurch, dass nur eine der Klemmeinheiten translatorisch verfahrbar ausgeführt ist, eine Vereinfachung der Konstruktion, so dass die Drahtverarbeitungsmaschine im Vergleich zu herkömmlichen Drahtverarbeitungsmaschinen mit zwei verstellbaren Klemmeinheiten kostengünstiger und robuster bereitgestellt werden kann.

Es kann vorgesehen sein, dass die verfahrbare Klemmeinheit beim Einrichten der Maschine manuell verstellt wird, so dass kein eigener Stellantrieb für die verfahrbare Klemmeinheit nötig ist. Dadurch ergibt sich eine kostengünstige, robuste Konstruktion. Vorzugsweise ist der verfahrbaren Klemmeinheit eine eigene Maschinenachse zugeordnet, so dass die verfahrbare Klemmeinheit in Reaktion auf Steuersignale einer Steuereinheit mittels eines Stellantriebs an die gewünschte Position verfahren werden kann. Damit können Kollisionen der Klemmeinheit mit anderen Komponenten der Abisoliereinrichtung systematisch vermieden werden, da die Steuerung die axiale Position der verfahrbaren Klemmeinheit jederzeit kennt. Außerdem sind auch Veränderungen des Abstands im laufenden Betrieb möglich.

Vorzugsweise ist die auf der Zufuhrseite angeordnete erste Klemmeinheit maschinenfest montiert und die in Durchlaufrichtung weiter hinten liegende zweite Klemmeinheit verfahrbar. Dadurch wird es besonders einfach, den Abstand zwischen den Klemmeinheiten für unterschiedliche Abisolier-Längen oder unterschiedlichen Abisolier-Operationen genau einzustellen. Es können relativ einfach auch große Arbeitsbereiche realisiert werden. Der "Arbeitsbereich" bezeichnet den verfügbaren Bereich von der minimalen bis zur der maximalen realisierbaren Abisolierlänge. Der Arbeitsbereich kann z.B. von 0 mm bis zu 120 mm oder mehr betragen.

Eine Klemmung des Flachmaterials zur Fixierung des zwischen den Klemmstellen liegenden Abschnitts für die Abisolier-Operation kann bei unterschiedlichen Techniken der Abisolierung nützlich sein, beispielsweise auch bei kontaktlos arbeitenden Abisolier-Techniken, wie zum Beispiel beim Abisolieren mittels Laserstrahlung. Besonders große Vorteile sind erzielbar, wenn bei der Abisolier-Operation die Isolationsschicht überwiegend oder ausschließlich durch Einwirkung mindestens eines mechanischen Abisolier-Werkzeugs mechanisch entfernt wird, z.B. durch Schaben, Schälen, Fräsen, Schleifen oder dergleichen. Durch die beidseitige Klemmung kann dabei verhindert werden, dass die auf das Flachmaterial wirkenden Bearbeitungskräfte das Flachmaterial derart quer zur Durchlaufrichtung auslenken, dass die Präzision der Abisolierung leidet. Durch die beidseitige Klemmung kann der abzuisolierende Abschnitt den Bearbeitungskräften gut widerstehen.

Bei bevorzugten Ausführungsformen umfasst die Abisolier-Operation eine Fräsoperation, die mittels einer Fräseinrichtung der Drahtverarbeitungsmaschine ausgeführt wird. Bei der Fräsoperation werden zwei um achsparallele Rotationsachsen drehbare Fräswerkzeuge mit Umfangsschneiden oder Stirnschneiden an gegenüberliegenden Seitenflächen des Flachmaterials in Richtung der Seitenflächen bis in eine Arbeitsposition mit Eingriff von Umfangsschneiden in die Isolationsschicht zugestellt und die Fräswerkzeuge werden relativ zu dem durch Einklemmen fixierten Flachmaterial parallel zur Durchlaufachse bewegt. Hierdurch lassen sich nach den Erfahrungen der Erfinder besonders gute Abisolier-Ergebnisse erzielen, wobei das Isolationsmaterial im Wesentlichen vollständig beseitigt werden kann, ohne dass es zu Verletzungen des metallischen Trägermaterials kommt. Bei alternativen Varianten können auch Schab-Messer oder Drehmesser zum mechanischen Abisolieren genutzt werden.

Gemäß einer Weiterbildung findet eine automatische Steuerung der axialen Position der zweiten Klemmstelle statt in der Weise, dass für jede Abisolier-Operation ein kürzestmöglicher Abstand zwischen den Klemmstellen eingestellt wird. Eine möglichst kurze Einspannlänge wirkt sich günstig auf die Stabilität des zwischenliegenden Abschnitts gegen in Querrichtung wirkende Bearbeitungskräfte aus.

Bei manchen Verfahrensvarianten wird während der Abisolier-Operation mindestens ein Abisolier-Werkzeug im Bereich zwischen den Klemmstellen zugestellt und von der ersten Klemmstelle in Richtung der zweiten Klemmstelle bewegt, wobei vorzugsweise die zweite Klemmstelle synchron mit der Bewegung des Abisolier-Werkzeugs unter Vergrößerung des Abstands zur ersten Klemmstelle verlagert wird. Somit kann zu jedem Zeitpunkt einer Abisolier-Operation näherungsweise die jeweils kürzestmögliche Einspannlänge realisiert werden. Das Abisolier-Werkzeug greift dann zu jedem Zeitpunkt in der Nähe der zweiten Klemmstelle am Flachmaterial an, so dass auch bei stärkeren Bearbeitungskräften das Flachmaterial kaum gegenüber diesen ausweichen kann.

Bei Varianten, die dafür ausgelegt sind, dass die verfahrbare Klemmeinheit während der Abisolier-Operation verfährt, also während das Material eingeklemmt sein soll, ist vorzugsweise die werkstückberührende Komponente einer Klemmeinheit, also das Klemmelement, als abrollfähiges Klemmelement ausgebildet, beispielsweise in Form einer beispielsweise zylindrischen Rolle oder eines über zwei oder mehr Rollen geführten Andrückbandes.

Gemäß einer Weiterbildung werden systematisch besonders gute Abisolier-Ergebnisse erzielt, indem das Flachmaterial vor einer Abisolier-Operation zunächst in einer Querrichtung in Bezug auf die Durchlaufachse zentriert und danach das zentrierte Flachmaterial in einer senkrecht zur Querrichtung orientierten Klemmrichtung eingeklemmt wird. Bei dieser Variante sind also die Funktionen des Zentrierens und des Klemmens funktional und zeitlich getrennt voneinander.

Konstruktiv kann dies dadurch erreicht werden, dass jeder der Klemmeinheiten eine gesondert steuerbare Zentriereinheit zum Zentrieren des Flachmaterials vor dem Einklemmen zugeordnet ist. Vorzugsweise hat jede der Zentriereinheiten eine Zentrierbaugruppe mit zwei ggf. in einer gemeinsamen Führung geführten Zentrierarmen, die mittels eines durch die Steuereinrichtung steuerbaren Antriebs zwischen einer Zentrierkonfiguration und einer geöffneten Konfiguration verfahrbar sind. Vorzugsweise wird ein pneumatischer Antrieb genutzt, der eine gewisse Nachgiebigkeit bereitstellt, so dass das Flachmaterial zwar schonend zentriert, aber nicht mit größerer Klemmkraft zwischen den Zentrierarmen geklemmt wird.

Gemäß einer Weiterbildung ist bei der Drahtverarbeitungsmaschine vorgesehen, dass jede der Klemmeinheiten eine Klemmbaugruppe mit zwei Klemmbacken aufweist, die mittels eines Antriebs zwischen einer Klemmkonfiguration und einer geöffneten Konfiguration verfahrbar sind, wobei jede der Klemmbacken einen von außen in Richtung der Durchlaufachse ragenden Auslegerarm aufweist, der an seinem freien Ende ein Klemmelement mit einer zum Andrücken an eine Seitenfläche des Flachmaterials ausgebildete Kontaktfläche aufweist. Bei dem Klemmelement kann es sich beispielsweise um einen Klemmschuh handeln, der eine im Wesentlichen ebene Kontaktfläche zum Auflegen auf die Breitseite des Flachmaterials aufweist. Durch die Ausgestaltung mit Auslegerarm kann ein ausreichend großer Abstand zwischen dem einzuklemmenden Flachmaterial und denjenigen Komponenten der Klemmeinheit geschaffen werden, die die Klemmbacken mit dem Auslegerarm tragen. Somit können insbesondere auch relativ kurze Abstände zwischen den Klemmstellen eingestellt werden.

Eine besonders kompakte Anordnung lässt sich dadurch erreichen, dass die Klemmbaugruppen der Klemmeinheiten jeweils derart schräg zur Durchlaufachse angeordnet sind, dass sich der Auslegerarm in einer Klemmebene bewegt, die schräg zur Durchlaufrichtung und zu einer senkrecht zur Durchlaufrichtung orientierten Orthogonalebene liegt. Insbesondere kann die Klemmebene in einem Winkel von 45° zur Durchlaufrichtung angestellt sein. Dadurch kann auf jeder Seite des Flachmaterials ausreichend Bauraum zur Unterbringung von anderen Komponenten der Abisolier-Einrichtung bereitgestellt werden, beispielsweise zur Unterbringung von Antrieben und Schlitten für verfahrbare Fräseinheiten.

Gemäß einer Weiterbildung hat jeder der Klemmschuhe eine zum Andrücken an die Werkstückoberfläche ausgebildete rechteckige Kontaktfläche mit parallel und senkrecht zur Durchlaufachse gerichteten Seitenkanten, die schräg zu einer Längsrichtung des Auslegerarms ausgerichtet sind, insbesondere in einem Winkel von 45°. Dadurch kann erreicht werden, dass das Klemmelement großflächig und damit ohne die Gefahr von Deformationen auf das Flachmaterial aufgedrückt werden kann und dennoch eine Schrägstellung der Klemmebene gegenüber der Durchlaufachse möglich ist.

Bei bevorzugten Ausführungsformen ist eine symmetrische Anordnung der Klemmeinheiten in der Weise vorgesehen, dass die Klemmebenen der Klemmbaugruppen parallel zueinander ausgerichtet sind.

Erhebliche Kosteneinsparungen lassen sich bei einer Ausführungsform dadurch erreichen, dass die Klemmbaugruppen der Klemmeinheiten im Wesentlichen baugleich ausgebildet sind. Dies bedeutet, dass sie im Wesentlichen aus Gleichteilen zusammengesetzt sind, die sich identisch bei beiden Klemmeinheiten finden. Dadurch wird die Fertigung vereinfacht und vergleichsweise kostengünstig.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind.
- Fig. 1: zeigt schematisch eine Biegemaschine gemäß einem Ausführungsbeispiel;
- Fig. 2: zeigt eine schrägperspektivische Ansicht der Abisoliereinrichtung des Ausführungsbeispiels aus Fig. 1 inklusive der Klemmeinheiten;
- Fig. 3: zeigt eine Draufsicht auf die Abisoliereinrichtung der Fig. 1 und 2;
- Fig. 4A und 4B: zeigen unterschiedliche Arbeitsstellungen der verfahrbaren Klemmeinheit;
- Fig. 5: zeigt ein Ausführungsbeispiel, bei welchem die verfahrbare zweite Klemmeinheit ein Klemmelement in Form einer drehbar gelagerten Rolle aufweist.

### DETAILLIERTE BESCHREIBUNG DER AUSFÜHRUNGSBEISPIELE

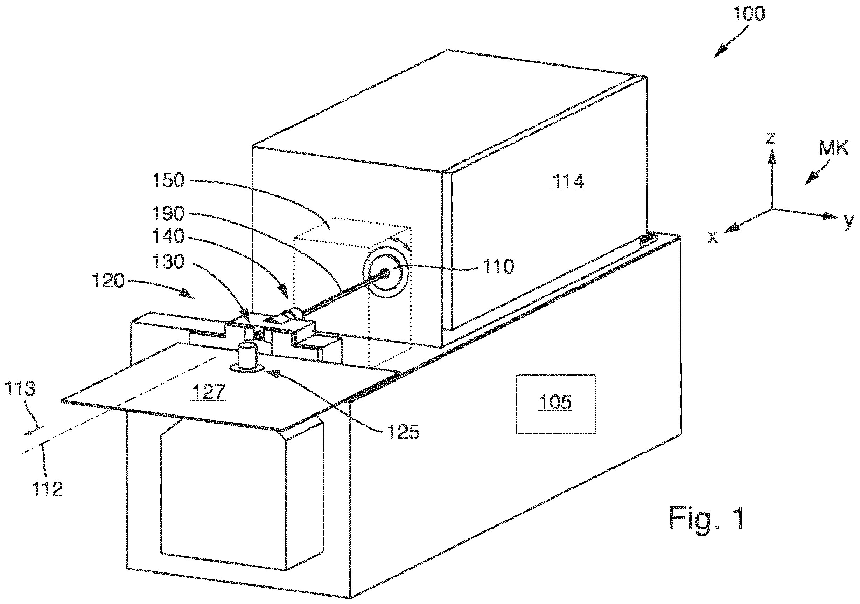

In Fig. 1 ist ein Ausführungsbeispiel einer Drahtverarbeitungsmaschine 100 in Form einer Biegemaschine zur Herstellung von zweidimensional oder dreidimensional gebogenen Formteilen bzw. Biegeteilen aus isoliertem Flachmaterial 190 gezeigt. Die Biegemaschine hat ein mit Kleinbuchstaben x, y und z gekennzeichnetes, rechtwinkliges Maschinenkoordinatensystem MK mit einer vertikalen z-Achse und horizontalen x- und y-Achsen. Im dargestellten Beispiel verläuft die x-Achse parallel zu einer Einzugsrichtung, in der das zu biegende Flachmaterial mithilfe einer Einzugseinrichtung 110 einer nachgeschalteten Biegeeinrichtung 120 zugeführt wird. Von den Koordinatenachsen des Maschinenkoordinatensystems sind die später noch erwähnten geregelt angetriebenen Maschinenachsen zu unterscheiden, die mit Großbuchstaben (zum Beispiel A-Achse, Z-Achse etc.) bezeichnet werden. Eine Steuerungseinheit 105 der Biegemaschine steuert und koordiniert die Arbeitsbewegungen aller Maschinenachsen.

Das umzuformende Ausgangsmaterial, nämlich isoliertes Flachmaterial 190, wird mithilfe der Einzugseinrichtung 110 entlang einer Durchlaufachse 112 in einer Durchlaufrichtung 113 durch die Biegemaschine gezogen. Die Einzugseinrichtung dient zum Zuführen des Flachmaterials von einem Materialvorrat. Die Vorschubkraft in Einzugsrichtung (parallel zur x-Richtung) entsteht durch Reibung zwischen Einzugselementen der Einzugseinrichtung und dem Flachmaterial. Die Einzugseinrichtung kann z.B. als Walzeneinzug, Riemeneinzug oder Zangeneinzug ausgestaltet sein. Bevor das Ausgangsmaterial (im Beispielsfall isoliertes Flachmaterial) in die Einzugseinrichtung 110 eintritt, passiert das Flachmaterial eine Richteinheit, die im Beispielsfall eine Anzahl von versetzt angeordneten Rollen aufweist und unter einer Schutzabdeckung 114 verborgen ist.

Für viele Biegeteile werden Biegungen in unterschiedlichen, im Winkel zueinander stehenden Biegeebenen benötigt, so dass die resultierenden Biegeteile dreidimensional gebogen sind. Um dies ohne komplizierten Aufbau der Biegeeinrichtung zu ermöglichen, ist die Einzugseinrichtung 110 um die Durchlaufachse in beiden Drehrichtungen drehbar. Dadurch kann auf einfache Weise zwischen einzelnen Biegeoperationen ein Wechsel zwischen Biegeebenen durchgeführt werden. Beim Ausführungsbeispiel werden die Einzugseinrichtung 110 und die vorgeschaltete Richteinrichtung mithilfe eines Servomotors einer entsprechenden Maschinenachse (A-Achse) gedreht. Die Einzugseinrichtung ist auf parallel zur x-Richtung verlaufenden Führungsschienen geführt und mittels eines Verschiebungsantriebs (V-Achse) parallel zur x-Richtung axial verschiebbar.

Zum Erzeugen von Biegungen an dem Flachmaterial 190 durch Umformung ist eine numerisch gesteuerte Biegeeinrichtung 120 vorgesehen. Im Biegebereich wird das Flachmaterial mithilfe eines CNC-gesteuerten Biegekopfs 125 der Biegeeinrichtung in die gewünschte Form gebogen. Der Biegekopf besitzt zwei unabhängig voneinander drehbare Wellen, nämlich eine Dornwelle und eine Hohlwelle. An der Dornwelle befinden sich Biegedorne. Je nach Bearbeitungswunsch kann der Biegekopf mit unterschiedlichen Werkzeugen ausgerüstet werden. Große Biegeteile können durch einen nachrüstbaren Auflagetisch 127 unterstützt werden. Die Komponenten der Biegeeinrichtung 120 können beim Wechsel der Biegeebene in Biegekopf-Achsrichtung (Z-Achse) senkrecht zur x-Richtung wegtauchen, um nach dem Wechsel der Biegeebene wieder in das Flachmaterial eingreifen zu können.

Zwischen dem Biegebereich mit dem Biegekopf 125 der Biegeeinrichtung 120 und der Einzugseinrichtung 110 ist eine Schnitteinrichtung 130 montiert, die dafür vorgesehen ist, das gefertigte Biegeteil (nach Abschluss aller Biegeoperationen) und ggf. einer oder mehrerer Verdreh-Operationen von dem zugeführten Flachmaterial abzutrennen. Die Schnitteinrichtung 130 der Biegemaschine ist als Beißschneideinrichtung ausgelegt, also so konfiguriert, dass das Flachmaterial mittels des Verfahrens "Beißschneiden" vom zugeführten Flachmaterial abgetrennt wird.

Die Biegemaschine 100 hat eine optionale integrierte Verdreheinrichtung 140, die dazu konfiguriert ist, vor Abtrennen des Biegeteils von dem zugeführten Flachmaterial in mindestens einem Abschnitt des Flachmaterials mittels einer Verdreh-Operation durch Torsion des Flachmaterials eine bleibende Verformung zu erzeugen. Alle zum Eingriff am Flachmaterial vorgesehenen Komponenten der Verdreheinrichtung 140 sind im Bereich zwischen dem Austritt der Einzugseinrichtung 110 und dem Biegekopf 125 der Biegeeinheit 120 angeordnet.

Aufbau und Funktion der bisher beschriebenen Komponenten der Biegemaschine können denen der Biegemaschine entsprechen, die in der DE 10 2018 209 889 A1 beschrieben ist. Deren Offenbarung wird insoweit durch Bezugnahme zum Inhalt der Beschreibung gemacht.

Mit der Biegemaschine 100 können unter anderem zweidimensional oder dreidimensional gebogene Stromschienen gefertigt werden, wie sie unter anderem in der Automobilbranche zum Transport elektrischer Energie zwischen Fahrzeugbaugruppen oder innerhalb von Batteriegruppen benötigt werden. Das Ausgangsmaterial ist in diesem Fall ein isoliertes Flachmaterial 190, welches im Wesentlichen aus einem elektrisch leitenden, metallischen Trägermaterial, einem Haftvermittler auf der Oberfläche des Trägermaterials sowie einer elektrisch isolierenden Isolationsschicht auf dem Haftvermittler besteht. Das Trägermaterial hat in der Regel einen flachen Querschnitt mit planparallelen Breitseiten und Schmalseiten, die die Breitseiten verbinden und mehr oder weniger stark gewölbt oder im Wesentlichen eben sein können. Häufig liegt näherungsweise ein Rechteckquerschnitt mit mehr oder weniger ausgedehnten abgerundeten Kanten vor. Das Flachmaterial kann auch einen im Wesentlichen quadratischen Querschnitt haben. Die Isolationsschicht umhüllt das Trägermaterial in der Regel vollständig. Die Isolationsschicht wird häufig aus bestimmten Polyamid-Kunststoffen gefertigt. Das Trägermaterial besteht meist aus Kupfer (Cu) oder Aluminium (AI) oder aus auf Cu oder Al basierenden Legierungen und ist für die Leitung des Stroms zuständig.

Die Breite des Flachmaterials (gemessen in Breitenrichtung senkrecht zur Längsrichtung) kann ein Vielfaches der Dicke (gemessen an den Schmalseiten) betragen, beispielsweise das Dreifache bis Siebenfache. Breiten können z.B. in der Größenordnung einiger Millimeter liegen. Die Isolationsschicht hat üblicherweise eine Dicke von weniger als 1 mm.

Die Biegemaschine 100 ist dafür ausgelegt, vor dem Abtrennen des Formteils von dem zugeführten Flachmaterial in mindestens einem Abschnitt des isolierten Flachmaterials einen Teil der Isolationsschicht in einer Abisolier-Operation von dem elektrisch leitenden Trägermaterial zu entfernen. Hierzu ist in die Biegemaschine eine Abisoliereinrichtung 150 integriert. Die werkstücknahen Komponenten der Abisoliereinrichtung sind in Durchlaufrichtung gesehen zwischen der Einzugseinrichtung 110 und der Schnitteinrichtung 130 angeordnet.

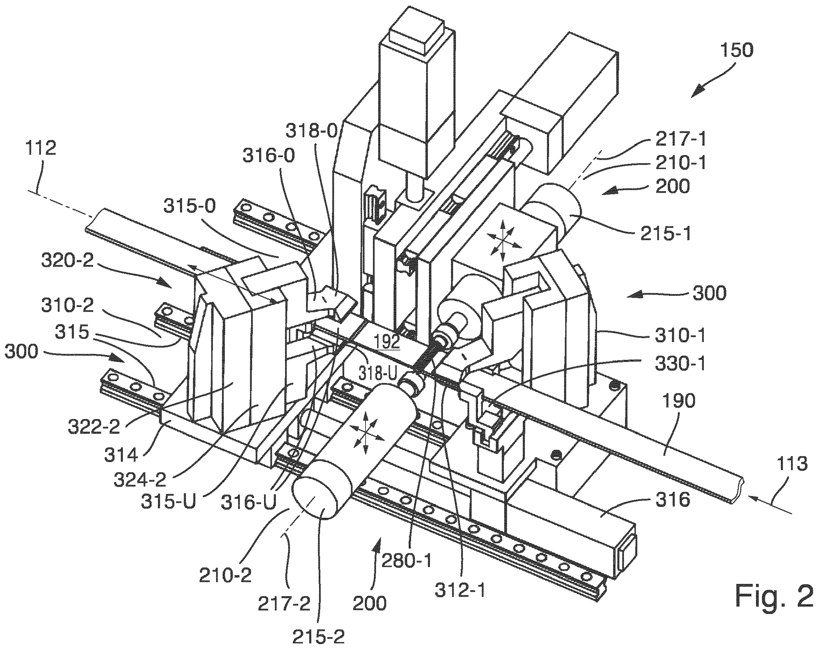

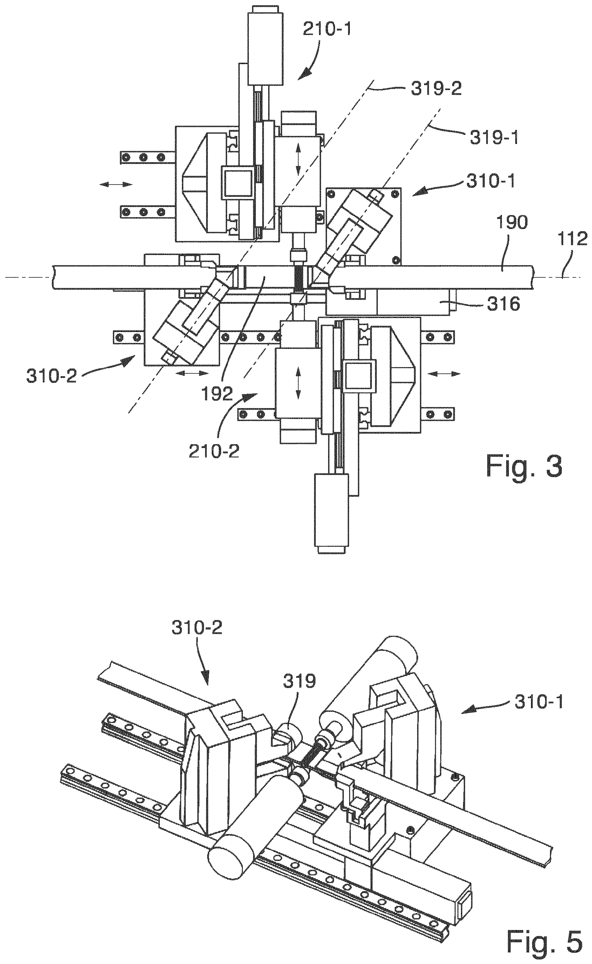

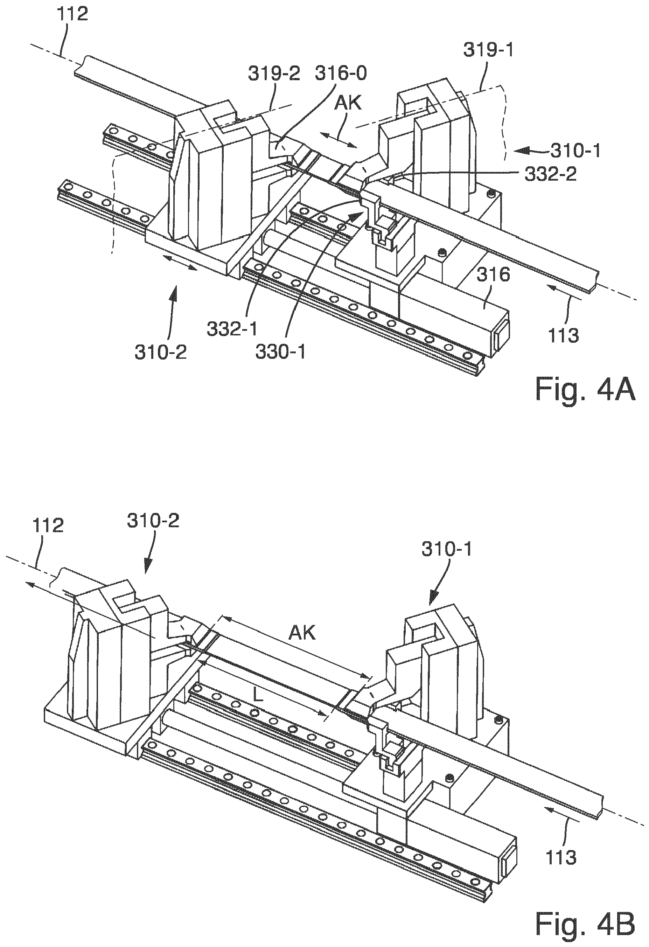

Anhand der Fig. 2 ff. werden nun der Aufbau und die Funktion der Abisoliereinrichtung 150 des Ausführungsbeispiels näher erläutert. Dabei zeigt Fig. 2 eine schrägperspektivische Ansicht einer Fräseinrichtung 200 und einer zugeordneten Klemmeinrichtung 300 der Abisoliereinrichtung 150, Fig. 3 zeigt eine Draufsicht von oben, die Fig. 4A und 4B zeigen unterschiedliche Arbeitsstellungen der Komponenten, und Fig. 5 zeigt ein anderes Ausführungsbeispiel.

Die Fräseinrichtung 200 weist zwei Fräseinheiten (erste Fräseinheit 210-1, zweite Fräseinheit 210-2) auf, deren Frässpindeln (erste Frässpindel 215-1, zweite Frässpindel 215-2) achsparallel und achsversetzt zueinander so angeordnet sind, dass die Rotationsachsen 217-1, 217-2 der Frässpindeln parallel versetzt zueinander liegen und die in den Frässpindeln aufgenommenen Fräswerkzeuge (siehe erstes Fräswerkzeug 280-1) um zueinander parallel versetzte Rotationsachsen (koaxial mit den Rotationsachsen 217-1, 217-2 der Frässpindeln) gedreht werden können.

Beide Frässpindeln 210-1, 210-2 sind mittels eigener Maschinenachsen in drei zueinander wechselweise orthogonalen Richtungen (Verschiebung parallel zur Durchlaufachse, Verschiebung parallel zur Rotationsachse des Fräswerkzeugs und Verschiebung senkrecht zur Rotationsachse) gesteuert beweglich. Unter anderem können die beschriebenen Komponenten der Fräseinrichtung 200 durch Koordination der in x-Richtung wirkenden Maschinenachsen gemeinsam parallel zur Durchlaufachse 112 vorgeschoben bzw. translatorisch bewegt werden.

Zu der Abisoliereinrichtung 150 gehört als funktioneller Bestandteil eine Klemmeinrichtung 300, die dafür eingerichtet ist, das Flachmaterial zur Durchführung einer Abisolier-Operation in Axialrichtung vor und hinter dem abzuisolierenden Abschnitt 192 durch Einklemmen so zu fixieren, dass das Flachmaterial während des Abisolierens steht und den Bearbeitungskräften praktisch nicht ausweichen kann. Die Klemmeinrichtung umfasst eine erste Klemmeinheit 310-1, die in Durchlaufrichtung 113 gesehen vor dem Arbeitsbereich der Fräseinrichtung 200 an einer ersten Klemmstelle 312-1 am Flachmaterial angreift, sowie eine zweite Klemmeinrichtung 310-2, die an einer zweiten Klemmstelle 312-2 in Durchlaufrichtung hinter dem Arbeitsbereich der Fräseinrichtung am Flachmaterial angreift. Die erste Klemmeinheit ist an einer vorgegebenen Position fest am Maschinengestell montiert, so dass die axiale Lage der ersten Klemmstelle 312-1 in Bezug auf das Maschinenkoordinatensystem festliegt.

Im Unterschied dazu ist die axiale Position der zweiten Klemmstelle 312-2 in Reaktion auf Steuersignale der Steuereinheit 105 stufenlos variabel einstellbar. Dazu sind die Komponenten der zweiten Klemmeinheit 310-2 auf einem Schlitten 314 montiert, der auf zwei parallel zur Durchlaufachse verlaufenden Führungsschienen 315 parallel zur Durchlaufachse 112 verfahren werden kann. Als Stellantrieb ist ein Servomotor 316 vorgesehen, der zwischen den Führungsschienen montiert ist und eine zwischen den Führungsschienen verlaufende Gewindespindel antreibt, auf der eine Gewindemutter läuft, die an der Unterseite des Schlittens 314 montiert ist. Durch Ansteuerung des Stellantriebs 316 kann der axiale Abstand AK zwischen den Klemmstellen 312-1, 312-2 zeitlich vor einer Abisolier-Operation oder auch während einer Abisolier-Operation stufenlos verstellt werden.

Die Klemmeinheiten 310-1, 310-2 sind im Wesentlichen baugleich unter Verwendung von Gleichteilen aufgebaut. Der Aufbau wird anhand der zweiten Klemmeinheit 310-2 näher erläutert. Diese weist eine auf dem Schlitten 314 montierte zweite Klemmbaugruppe 320-2 auf, die eine auf der Schlittenplatte montierte vertikale Stütze 322-2 aufweist, die an ihrer dem Werkstück beziehungsweise der Durchlaufachse 112 zugewandten Seite ein massives Führungselement 324-2 mit einer in z-Richtung verlaufenden Führungsnut stützt. Darin sind ein oberer Klemmbacken 315-0 und ein unterer Klemmbacken 315-U gegenläufig verschiebbar geführt. Der zugehörige elektromechanische Stellantrieb kann die Klemmbacken zwischen einer in Fig. 2 dargestellten geöffneten Konfiguration und einer Klemmkonfiguration mit Klemmeingriff am Flachmaterial 190 verfahren.

Jeder der Klemmbacken hat einen in der Führungsnut laufenden Basisabschnitt, von dem ein horizontaler Auslegerarm 316-0 beziehungsweise 316-U in Richtung Durchlaufachse ragt. An den freien Enden der Auslegerarme sind jeweils Klemmelemente in Form von verbreiterten Klemmschuhen 318-0 und 318-U ausgebildet, die an ihrer dem Werkstück beziehungsweise der Durchlaufachse zugewandten Seite eine ebene Kontaktfläche zum großflächigen Andrücken auf die Oberseite beziehungsweise die Unterseite des Flachmaterials 190 aufweisen. Die horizontale Längsrichtung des Auslegerarms und die vertikale Richtung der Führung der Klemmbacken spannen eine Klemmebene 319-2 auf, die in einem Winkel von 45° zur Durchlaufachse 112 beziehungsweise zu den parallel zur Durchlaufachse verlaufenden Seitenkanten des Klemmschuhs verlaufen.

Die erste Klemmeinheit 310-1 hat einen entsprechenden Aufbau mit entsprechender schräger Orientierung ihrer Klemmebene 319-1. Die Klemmebenen sind in 45° zur Durchlaufachse 112 bzw. zur Durchlaufrichtung angestellt und verlaufen parallel zueinander. Diese Schrägstellung bietet mehrere Vorteile. Zum einen bleibt neben den schräg gestellten Klemmbaugruppen jeweils genügend Bauraum für die Komponenten der parallel zur Durchlaufachse verfahrbaren Fräseinheiten. Zum anderen können die Klemmeinheiten ohne Kollision der Klemmbaugruppen so weit aufeinander zu gefahren werden, dass der axiale Abstand AK zwischen den Klemmstellen bei zurückgezogenen Fräseinheiten praktisch bis auf 0 reduziert werden kann, so dass sehr kurze Einklemmlängen eingestellt werden können.

Die Klemmeinheiten sind dafür ausgelegt, das Flachmaterial ausschließlich in vertikaler Klemmrichtung zu klemmen. Sie haben keine Zentrierfunktion in Querrichtung (y-Richtung). Um dennoch das Flachmaterial exakt zur Durchlaufachse 112 zu zentrieren, ist jeder der Klemmeinheiten eine gesondert steuerbare Zentriereinheit zugeordnet. In Fig. 2 ist die vordere Zentriereinheit 330-1 besonders gut zu erkennen. Ihre Komponenten sind auf der Grundplatte montiert, die auch die Klemmbaugruppe trägt. Die Zentrierbaugruppe hat zwei Zentrierarme 332-1, 332-2, die in einer senkrecht zur Durchlaufachse verlaufenden horizontalen Führung geführt sind und mittels eines pneumatischen Antriebs in Richtung aufeinander zu oder voneinander weg zwischen einer Zentrierkonfiguration mit gleichzeitigem Eingreifen an den Schmalkanten des Flachmaterials und einer geöffneten Konfiguration verfahren werden können. In einer Phase zur Vorbereitung einer Abisolier-Operation wird zunächst die Zentriereinheit angesteuert, um das Flachmaterial in Querrichtung (y-Richtung) zu zentrieren, bevor danach die Klemmeinheit angesteuert wird, um das zentrierte Flachmaterial in vertikaler Klemmrichtung (z-Richtung) einzuklemmen. Dann beginnt die Abisolier-Operation.

In allen Verfahrensvarianten ist es aufgrund der Einstellbarkeit der axialen Position der zweiten Klemmeinheit 310-2 möglich, den Abstand AK zwischen den Klemmstellen an die Länge des abzuisolierenden Bereichs, also an die Abisolier-Länge L, anzupassen. Fig. 4A zeigt dazu beispielhaft den Fall einer relativ kleinen Abisolier-Länge und Fig. 4B den Fall einer größeren Abisolier-Länge L, die dadurch eingestellt werden kann, dass die zweite Klemmeinheit 310-2 entsprechend auf einen größeren Abstand AK zur maschinenfest montierten ersten Klemmeinheit 310-1 verfahren wird. Die Abisolier-Operation kann dann nach Einstellen dieses Abstandes und Einklemmen des Flachmaterials beginnen. Generell gilt AK > L, die freie Länge zwischen den Klemmstellen ist also größer als die Abisolierlänge. Der Unterschied L - AK kann unabhängig von der Länge L im Wesentlichen gleich bleiben.

Anhand von Fig. 5 wird ein anderes Ausführungsbeispiel beschrieben. Dort hat die zufuhrseitige erste Klemmeinheit 310-1 den gleichen Aufbau wie beim ersten Ausführungsbeispiel. Bei der verfahrbaren zweiten Klemmeinheit 310-2 ist im Unterschied zu dem ersten Ausführungsbeispiel am freien Ende jedes der Auslegerarme ein Klemmelement in Form einer mit horizontaler Rotationsachse gelagerten Andrückrolle 319 montiert. Hier läuft die Abisolier-Operation so ab, dass zunächst das Flachmaterial 190 an den beiden Klemmstellen vor und hinter dem abzuisolierenden Bereich eingeklemmt wird und die Fräseinheiten in Eingriff mit dem Flachmaterial gebracht werden. Anfänglich ist die eingespannte Länge, also der Abstand AK, zwischen den Klemmstellen relativ kurz. Danach verfahren die Fräseinheiten langsam in Richtung der zweiten Klemmeinheit 310-2 und bewegen sich von der ersten Klemmstelle 312-1 weg. Zeitgleich und mit gleicher Geschwindigkeit wird die zweite Klemmeinheit 310-2 zur Vergrößerung des Abstandes zur ersten Klemmeinheit langsam vorgeschoben. Das Flachmaterial bleibt dabei zwischen den sich gegenläufig drehenden Andrückrollen eingeklemmt. Dabei können die beiden Bewegungen so synchronisiert sein, dass sich der Abstand zwischen der zweiten Klemmstelle (dort wo die Rollen auf das Flachmaterial aufgedrückt sind) und der Eingriffsposition der Fräser im Wesentlichen nicht ändert, so dass die Fräser immer relativ nah bei der zweiten Klemmstelle angreifen, wodurch ein vertikales Verdrängen des Flachmaterials weitgehend unterbunden wird.

Nach den Erkenntnissen der Erfinder hat der Abstand zwischen den Klemmstellen wesentlichen Einfluss auf das Fräsergebnis. Bei den Ausführungsformen ist die Klemmung auf der Zufuhrseite fix, die hintere Klemmung kann dagegen mittels eines Servomotors verfahren werden. Der kürzestmögliche Klemmabstand kann automatisch angefahren werden. Es wird eine Kollision des Fräsers mit der Klemmeinrichtung verhindert, weil die Steuerung die Position der Klemmstellen kennt. Die bewegliche Klemmstelle kann bei Bedarf während des Fräsvorganges parallel zum Vorschub verfahren werden.

## Patentansprüche

1. Verfahren zur Herstellung von geraden oder gebogenen Formteilen aus isoliertem Flachmaterial, das ein elektrisch leitendes Trägermaterial aufweist, welches von einer elektrisch isolierenden Isolationsschicht umhüllt ist, wobei
das isolierte Flachmaterial mittels einer Einzugseinrichtung von einem Materialvorrat abgezogen wird,
in einer Drahtverarbeitungsmaschine zu einem geraden oder gebogenen Formteil aus isoliertem Flachmaterial verarbeitet wird, und
das Formteil in einer Schnittoperation von dem zugeführten isolierten Flachmaterial abgetrennt wird, wobei
vor dem Abtrennen des Formteils von dem zugeführten Flachmaterial ein Abschnitt des Flachmaterials an einer zufuhrseitigen ersten Klemmstelle und einer mit Abstand dazu liegenden zweiten Klemmstelle durch Einklemmen (in einer Klemmrichtung) fixiert wird und in einem Zwischenbereich zwischen den Klemmstellen ein Teil der Isolationsschicht in einer Abisolier-Operation über eine Abisolierlänge von dem elektrisch leitenden Trägermaterial entfernt wird,
**dadurch gekennzeichnet, dass**
der Abstand zwischen den Klemmstellen an Parameter der Abisolier-Operation angepasst wird, wobei eine der Klemmstellen maschinenfest fixiert bleibt und nur die andere Klemmstelle zur Veränderung des Abstands zwischen den Klemmstellen verfahren wird.

2. Verfahren nach Anspruch 1, **gekennzeichnet durch** eine automatische Steuerung der (axialen) Position der zweiten Klemmstelle, vorzugsweise derart, dass für jede Abisolier-Operation ein minimaler Abstand zwischen den Klemmstellen eingestellt wird.

3. Verfahren nach Anspruch 1 oder 2, **dadurch gekennzeichnet, dass** die erste Klemmstelle ortsfest bleibt und nur die zweite Klemmstelle in Abhängigkeit von der Abisolierlänge verlagert wird.

4. Verfahren nach einem der vorhergehenden Ansprüche, **dadurch gekennzeichnet, dass** bei der Abisolier-Operation die Isolationsschicht überwiegend oder ausschließlich durch Einwirkung mindestens eines mechanischen Abisolierwerkzeugs mechanisch entfernt wird, wobei vorzugsweise die Abisolier-Operation eine Fräsoperation umfasst.

5. Verfahren nach einem der vorhergehenden Ansprüche, **dadurch gekennzeichnet, dass** während einer Abisolier-Operation mindestens ein Abisolierwerkzeug von der ersten Klemmstelle in Richtung der zweiten Klemmstelle bewegt wird, wobei vorzugsweise die zweite Klemmstelle synchron mit der Bewegung des Abisolierwerkzeugs unter Vergrößerung des Abstands zur ersten Klemmstelle verlagert wird.

6. Verfahren nach einem der vorhergehenden Ansprüche, **dadurch gekennzeichnet, dass** das Flachmaterial vor einer Abisolier-Operation zunächst in einer Querrichtung in Bezug auf eine Durchlaufachse zentriert und danach das zentrierte Flachmaterial in einer senkrecht zur Querrichtung orientierten Klemmrichtung eingeklemmt wird.

7. Drahtverarbeitungsmaschine (100) zum Herstellen von geraden oder gebogenen Formteilen aus isoliertem Flachmaterial (190) umfassend:
eine Einzugseinrichtung (110) zum Einziehen des Flachmaterials von einem Materialvorrat und zum Fördern des Flachmaterials parallel zu einer Durchlaufachse (112);
eine Schnitteinrichtung (130) zum Abtrennen des Formteils von dem zugeführten isolierten Flachmaterial;
eine integrierte Abisoliereinrichtung (150) zum Abisolieren von Abschnitten des isolierten Flachmaterials (190) vor Abtrennen des Formteils von dem zugeführten Flachmaterial, wobei die Abisoliereinrichtung eine Klemmeinrichtung (300) mit Klemmelementen zur Fixierung des Flachmaterials in Bezug auf eine Durchlaufachse (112) während einer Abisolier-Operation umfasst;
**dadurch gekennzeichnet, dass**
die Klemmeinrichtung (300) eine zufuhrseitige erste Klemmeinheit (310-1) und eine mit Abstand dazu angeordnete zweite Klemmeinheit (310-2) aufweist,
wobei eine der Klemmeinheiten maschinenfest montiert ist und nur die andere Klemmeinheit zur Veränderung des Abstands (AK) zwischen den Klemmeinheiten über eine Verfahrstrecke verfahrbar ist.

8. Drahtverarbeitungsmaschine (100) nach Anspruch 7, **dadurch gekennzeichnet, dass** der verfahrbaren Klemmeinheit (310-2) eine eigene Maschinenachse zugeordnet ist derart, dass die verfahrbare Klemmeinheit in Reaktion auf Steuersignale einer Steuereinheit (105) mittels eines Stellantriebs (316) verfahrbar ist.

9. Drahtverarbeitungsmaschine (100) nach Anspruch 7 oder 8, **dadurch gekennzeichnet, dass** die erste Klemmeinheit (310-1) maschinenfest montiert ist und die zweite Klemmeinheit (310-2) verfahrbar ist.

10. Drahtverarbeitungsmaschine (100) nach einem der Ansprüche 7 bis 9, **dadurch gekennzeichnet, dass** jede der Klemmeinheiten (310-1, 310-2) eine Klemmbaugruppe (320-1, 320-2) mit zwei Klemmbacken (315-O, 315-U) aufweist, die mittels eines Antriebs zwischen einer Klemmkonfiguration und einer geöffneten Konfiguration verfahrbar sind, wobei jeder der Klemmbacken einen in Richtung Durchlaufachse ragenden Auslegerarm (316-O, 316-U) aufweist, der an seinem freien Ende ein Klemmelement (318-O, 318-U, 319) mit einer zum Andrücken an eine Seitenfläche des Flachmaterials (190) ausgebildeten Kontaktfläche aufweist.

11. Drahtverarbeitungsmaschine (100) nach Anspruch 10, **dadurch gekennzeichnet, dass** die Klemmbaugruppen der Klemmeinheiten jeweils derart schräg zur Durchlaufachse angeordnet sind, dass sich der Auslegerarm in einer Klemmebene (319-1, 319-2) bewegt, die schräg zur Durchlaufachse (112) und zu einer senkrecht zur Durchlaufachse (112) orientierten Orthogonalebene liegt, insbesondere in einem Winkel vom 45° zur Durchlaufachse, wobei vorzugsweise die Klemmebenen (319-1, 319-2) der Klemmbaugruppen (320-1, 320-2) parallel zueinander ausgerichtet sind.

12. Drahtverarbeitungsmaschine (100) nach einem der Ansprüche 10 oder 11, **dadurch gekennzeichnet, dass** einige oder alle Klemmelemente (318-0, 318-U) eine zum Andrücken an eine Seitenfläche des Flachmaterials ausgebildete rechteckige Kontaktfläche mit parallel und senkrecht zur Durchlaufachse gerichteten Seitenkanten aufweist, die schräg zu einer Längsrichtung des Auslegerarms ausgerichtet sind, insbesondere in einem Winkel von 45°.

13. Drahtverarbeitungsmaschine (100) nach einem der Ansprüche 10 bis 12, **dadurch gekennzeichnet, dass** die zweite Klemmeinheit (310-2) an den Enden von Auslegerarmen abrollfähige Klemmelemente aufweist, insbesondere in Form einer drehbar gelagerten Rolle.

14. Drahtverarbeitungsmaschine (100) nach einem der Ansprüche 10 bis 13, **dadurch gekennzeichnet, dass** die Klemmbaugruppen (320-1, 320-2) der Klemmeinheiten baugleich ausgebildet sind.

15. Drahtverarbeitungsmaschine (100) nach einem der Ansprüche 7 bis 14, **dadurch gekennzeichnet, dass** jeder der Klemmeinheiten (310-1, 310-2) eine gesondert steuerbare Zentriereinheit (330-1, 330-2) zum Zentrieren des Flachmaterials (190) vor dem Einklemmen zugeordnet ist, wobei vorzugsweise jede der Zentriereinheiten eine Zentrierbaugruppe mit zwei in einer gemeinsamen Führung geführten Zentrierarmen (332-1, 332-2) aufweist, die mittels eines vorzugsweise pneumatischen Antriebs zwischen einer Zentrierkonfiguration und einer geöffneten Konfiguration verfahrbar sind.
